# EUROPÄISCHE PATENTANMELDUNG

(11) **EP 1 741 327 A1**
(43) Veröffentlichungstag der Anmeldung: **10.01.2007**
(21) Anmeldenummer: 06013210.7
(22) Anmeldetag: 27.06.2006
(51) Int. Cl.: A01C 5/06

(54) **Scheibenschar**

(30) Priorität: 07.07.2005 DE 102005031740
(71) Anmelder: Amazonen-Werke H. Dreyer GmbH & Co. KG, 49205 Hasbergen (DE)
(72) Erfinder: Olderog-Enge, Arndt, 23769 Dänschendorf a/F (DE); Tiessen, Reimer Uwe, 26135 Oldenburg (DE); Steen, Rüdiger, 27798 Hude (DE)

(57) **Zusammenfassung**

Scheibenschar zum Einbringen von landwirtschaftlichen Materialien in den Boden mit einer an einem Scharhalter (1) über ein einen Achshalter (8) aufweisendes Lagerelement frei drehbar angeordneten Scharscheibe (9), wobei der Achshalter (8) mittels eines Sicherungsbolzens (10) am Scharhalter (1) befestigt ist, und wobei an dem Scharhalter (1) ein zumindest teilweise im Scharscheibenschatten angeordneter Furchenformer (12) befestigt ist. Um eine einfachere und lagesichere Anordnung des Furchformers (12) am Scharhalter (1) zu erreichen, ist vorgesehen, dass der Furchformer (12) ebenfalls mittels des Sicherungsbolzens (10) befestigt ist.

## Beschreibung

Die Erfindung betrifft ein Scheibenschar gemäß des Oberbegriffes des Patentanspruches 1.

Ein derartiges Scheibenschar ist beispielsweise durch die DE 198 18 063 A1 bekannt. An dem Scharhalter des Scheibenschares ist über ein einen Achshalter aufweisendes Lagerelement die Scharscheibe frei drehbar angeordnet. Der Achshalter ist mittels eines Sicherungsbolzens, der als Schraube ausgebildet ist, am Scharhalter befestigt. An dem Scharhalter ist weiterhin mittels einer zusätzlichen Schraube im Scharscheibenschatten ein Furchenformer befestigt. Um den Furchenformer in exakter Weise gegenüber der Scharscheibe befestigen zu können, muss die Lage der Befestigung und die Befestigungsfläche des Furchformers am Scharhalter genau ausgerichtet angeordnet sein. Dieses ist nicht immer in einfacher Weise möglich.

Der Erfindung liegt die Aufgabe zugrunde, eine einfachere und lagesichere Anordnung des Furchformers am Scharhalter zu erreichen.

Diese Aufgabe wird erfindungsgemäß dadurch gelöst, dass der Furchenformer ebenfalls mittels des Sicherungsbolzens befestigt ist. Durch die Befestigung des Furchenformers mittels des Sicherungsbolzens, mit dem auch der Achshalter der Scharscheibe am Schar befestigt ist, wird der Furchenformer genau am Scharhalter gegenüber der Scharscheibe positioniert ausgerichtet befestigt.

Eine einfache Anordnung des Sicherungsbolzens zur genauen Befestigung der Scharscheibe und des Furchformers am Scharhalter wird dadurch erreicht, dass die Mittellängsachse des Sicherungsbolzens mit der Drehachse der Scharscheibe zusammenfällt.

Um sicher zu stellen, dass der Furchenformer sich nicht gegenüber dem Scharhalter verdreht und in der gewünschten Position am Scharhalter gegenüber der Scharscheibe positioniert ist, ist vorgesehen, das dass zwischen dem Furchenformer und dem Scharhalter ein Verdrehsicherungselement angeordnet ist.

Damit der Furchenformer ausweichen kann, so dass es zu keinen Beschädigungen am Scheibenschar kommt, wenn sich unzerdrückbare Gegenstände zwischen dem Furchenformer und der Scharscheibe festsetzen, ist vorgesehen, dass der Furchenformer federnd ausweichbar gegenüber der Scharscheibe angeordnet ist. Hierdurch kommt auch der sich zwischen dem Furchenformer und der Scharscheibe geratene unzerdrückbare Gegenstand wieder frei.

Auch ist eine seitliche Ausweichbarkeit des Furchenformers sowie eine genaue Positionierung während der Säarbeit dadurch möglich, dass der Furchenformer von der Scharscheibe weg beweglich angeordnet ist, dass ein Anschlag am Achshalter angeordnet ist, dass der Furchenformer während des Säeinsatzes am Anschlag zur Anlage kommt.

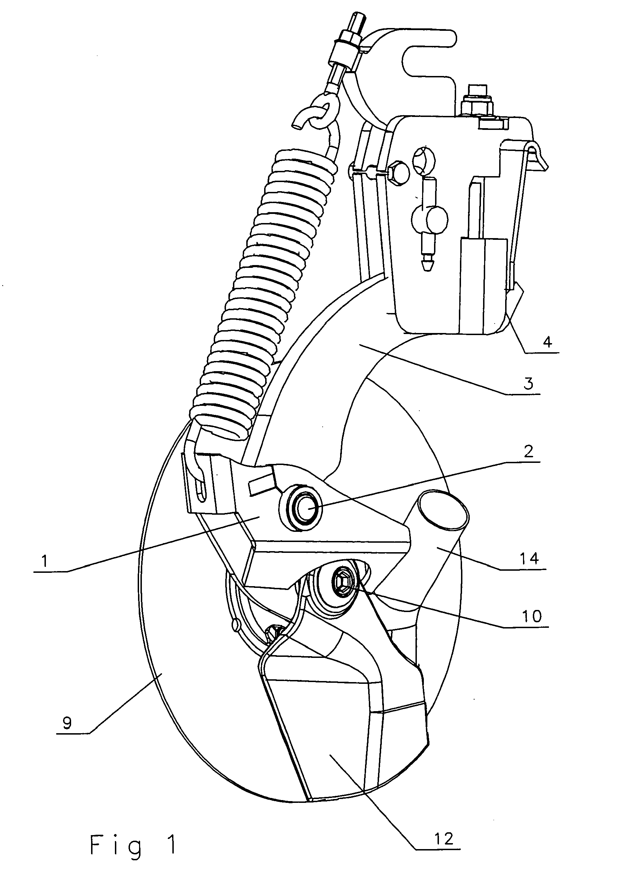

Weitere Einzelheiten der Erfindung sind der Beispielsbeschreibung und den Zeichnungen zu entnehmen. Hierbei zeigen
- Fig. 1: das Säschar in perspektivischer Darstellung von vorne links,

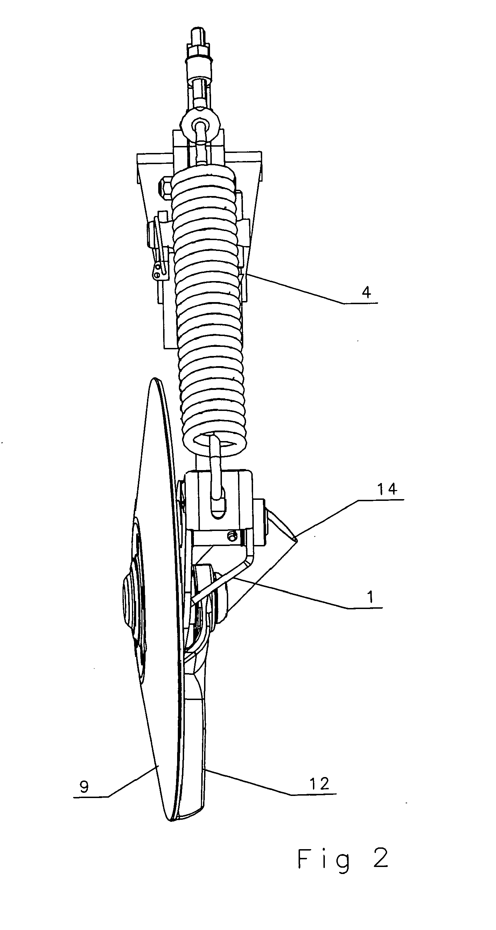

- Fig. 2: das Säschar in der Ansicht von vorne,

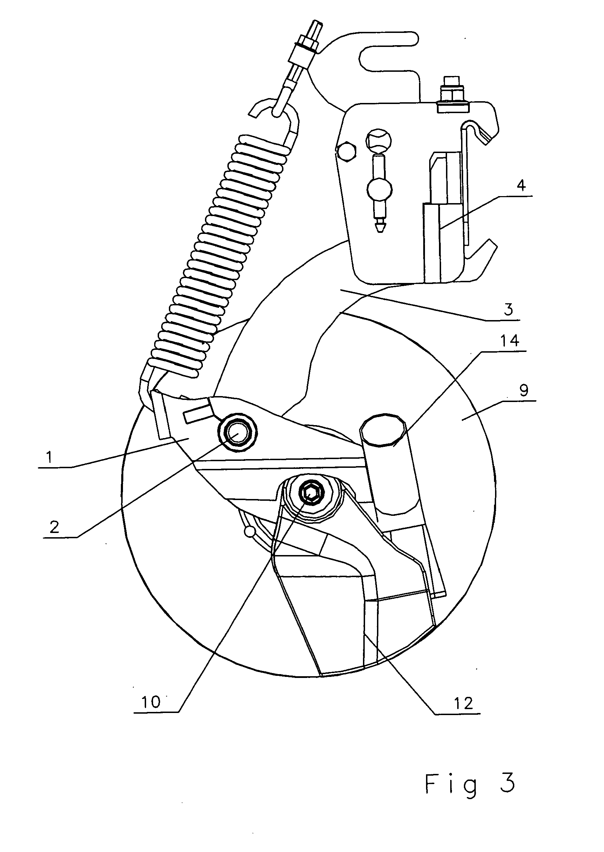

- Fig. 3: das Säschar in Seitenansicht,

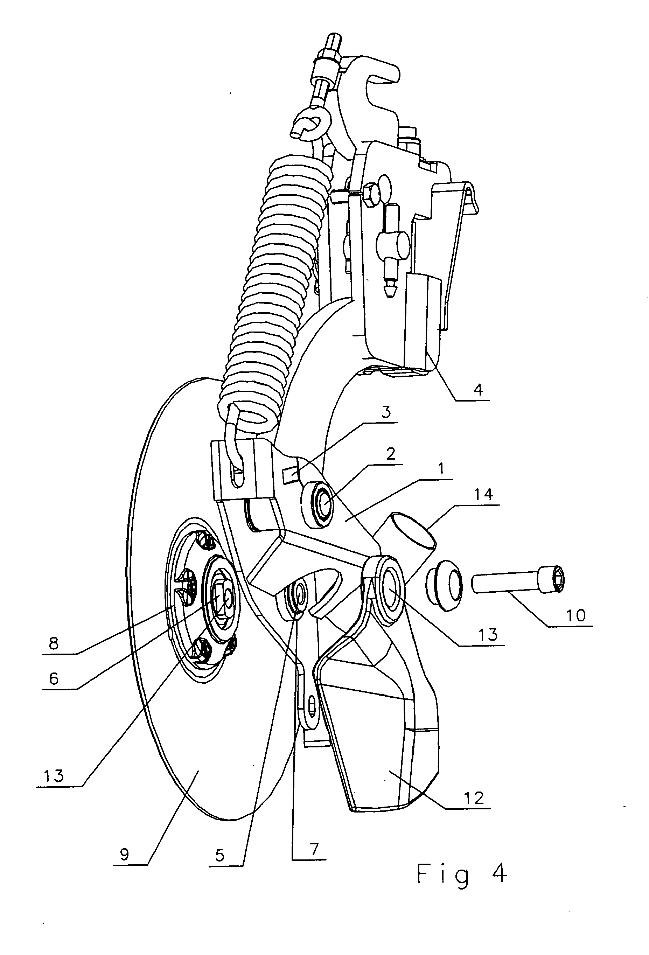

- Fig. 4: das Säschar in perspektivischer Darstellung von vorne links in Explosionsdarstellung und

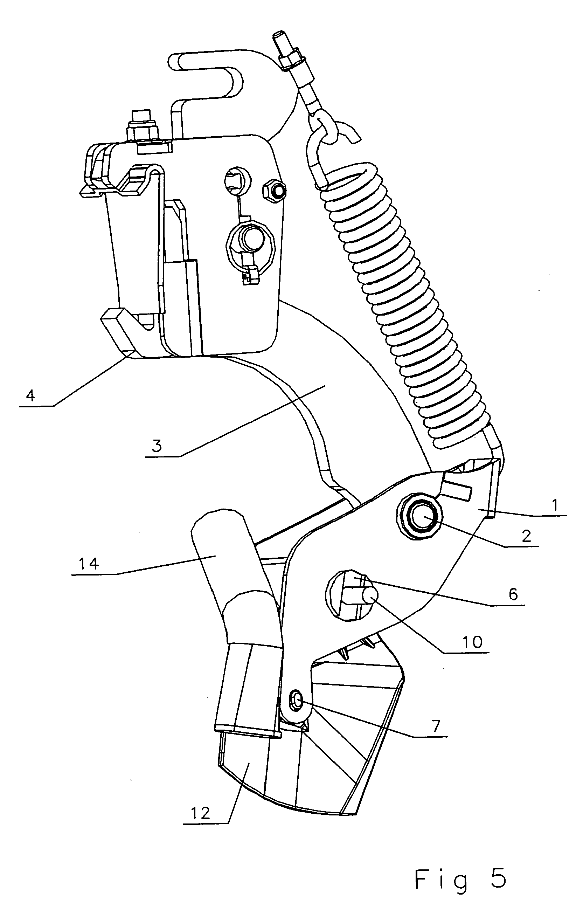

- Fig. 5: den Scharhalter in perspektivischer Darstellung von vorne rechts.

Das Scheibensäschar ist zum Einbringen von landwirtschaftlichen Materialien, wie Saatgut oder Düngung in den Boden ausgebildet. Es weist den Scharhalter 1 auf, der über ein Gelenk 2 an einem Tragarm 3 über eine Haltevorrichtung 4 an einen Querträger einer landwirtschaftlichen Verteilmaschine anzubringen ist. Der Scharhalter 1 weist an seinen unteren Ende eine Durchtrittsbohrung 5 auf. Im Bereich dieser Durchtrittsbohrung 5 sind auf beiden Seiten des Scharhalters 1 Verdrehsicherungselemente 6, 7 angeordnet. An dem Scharhalter 1 ist über den Achshalter 8, auf dem die Scharscheibe 9 mittels eines Lagers frei drehbar gelagert ist, in zusammen wirken mit dem Verdrehsicherungselement 6 verdrehsicher am Scharhalter 1 anzubringen. Zur Befestigung des Achshalters 8 am Scharhalter 1 ist der Sicherungsbolzen 10 vorgesehen, der in das in dem Achshalter 8 angebrachte Schraubgewinde 11 einschraubbar ist. Auf der der Scharscheibe 9 abgewandten Seite des Scharhalters 1 ist der Furchenformer 12 anzuordnen. Das zwischen dem Scharhalter 1 und Furchenformer 12 wirksame Drehversicherungselement 7 ist eine verdrehgesicherte Befestigung des Furchenformers 12 am Scharhalter 1 angeordnet. Der Furchformer 12 weist auf seiner oberen Seite eine Durchtrittsöffnung 13 auf, wobei sich im Bereich der Durchtrittsöffnung 13 auf der dem Scharhalter 1 zugewandten Seite des Furchenformers 12 sich ein mit dem Verdrehsicherungselement 9 zusammenwirkender Bereich befindet. Der Furchenformer 12 wird durch das, durch die Durchtrittsöffnung 13 des Furchenformers 12 gesteckten Sicherungsbolzen 10 gleichzeitig mit dem Achshalter 8 der Scharscheibe 9 am Scharhalter 1 befestigt. Die Mittellängsachse des Sicherungsbolzens 10 fällt der Drehachse der Scharscheibe 9 zusammen. Der Furchenformer 12 ist gleichzeitig als Materialleitelement ausgebildet, so dass das durch das als Rohr 14 ausgebildete Zuführungselement am unteren Ende austretende Material durch die Innenseite der Scharscheibe 9 und der Innenrückseite des Furchenformers 12 sicher in die von der Scharscheibe 9 und dem Furchenformer 12 ausgeformten Furche fällt. Der Furchenformer 12 ist als Schleifkufe ausgebildet. Die Scharscheibe 9 ist im Winkel zur Fahrtrichtung angestellt, so dass sie in Verbindung mit dem Furchenformer 12 eine Furche im Boden schaffen kann.

Der Furchenformer 12 kann fest oder federnd ausweichbar gegenüber der Scharscheibe 9 angeordnet sein. Des weiteren ist es möglich, dass der Furchenformer 12 von der Scheibe 9 weg beweglich angeordnet ist, wobei ein Anschlag am Scharhalter 1 angeordnet ist, an den der Furchenformer 12, während des Säeinsatzes zur Anlage kommt.

## Patentansprüche

1. Scheibenschar zum Einbringen von landwirtschaftlichen Materialien in den Boden mit einer an einem Scharhalter über ein einen Achshalter aufweisendes Lagerelement frei drehbar angeordneten Scharscheibe, wobei der Achshalter mittels eines Sicherungsbolzens am Scharhalter befestigt ist, und wobei an dem Scharhalter ein zumindest teilweise im Scharscheibenschatten angeordneter Furchenformer befestigt ist, **dadurch gekennzeichnet, dass** der Furchformer (12) ebenfalls mittels des Sicherungsbolzens (10) befestigt ist.

2. Scheibenschar nach Anspruch 1, **dadurch gekennzeichnet, dass** die Mittellängsachse des Sicherungsbolzens (10) mit der Drehachse der Scharscheibe (9) zusammenfällt.

3. Scheibenschar nach Anspruch 1, **dadurch gekennzeichnet, dass** zwischen dem Furchenformer (12) und dem Scharhalter (1) ein Verdrehsicherungselement (7) angeordnet ist.

4. Scheibenschar nach einem oder mehreren der vorstehenden Ansprüche, **dadurch gekennzeichnet, dass** der Furchenformer (12) als Materialleitelement ausgebildet ist.

5. Scheibenschar nach einem oder mehreren der vorstehenden Ansprüche, **dadurch gekennzeichnet, dass** der Furchenformer (12) als Schleifkufe ausgebildet ist.

6. Scheibenschar nach einem oder mehreren der vorstehenden Ansprüche, **dadurch gekennzeichnet, dass** das Scheibenschar mit einem Winkel zur Fahrtrichtung angestellt ist.

7. Scheibenschar nach einem oder mehreren der vorstehenden Ansprüche, **dadurch gekennzeichnet, dass** der Furchenformer (12) federnd ausweichbar gegenüber der Scharscheibe angeordnet ist.

8. Scheibenschar nach einem oder mehreren der vorstehenden Ansprüche, **dadurch gekennzeichnet, dass** der Furchenformer (12) von der Scharscheibe weg beweglich angeordnet ist, dass ein Anschlag am Achshalter angeordnet ist, dass der Furchenformer während des Säeinsatzes am Anschlag zur Anlage kommt.
